Europäisches Patentamt

European Patent Office

Office européen des brevets

(19)

(11) Publication number: **0 073 084**

**A1**

(12) # EUROPEAN PATENT APPLICATION

(21) Application number: 82201035.1

(51) Int. Cl.³: **B 60 P 1/16**

(22) Date of filing: 17.08.82

(30) Priority: 17.08.81 NL 8103845

(43) Date of publication of application:
02.03.83 Bulletin 83/9

(84) Designated Contracting States:
AT BE CH DE FR GB IT LI LU NL SE

(71) Applicant: CARDANAS B.V.
Lage Brink 19
NL-7317 BD Apeldoorn(NL)

(72) Inventor: Bruins, Wim
Poortersveld 724
NL-7327 AR Apeldoorn(NL)

(74) Representative: Morel, Christiaan F., Dr.Ir.
MORELPATENT Laarstraat 3
NL-8166 GR Emst (Epe)(NL)

(54) Tipping mechanism for a load carrying body of a vehicle.

(57) Tipping mechanism for a load carrying body (9) of a vehicle (1), comprising a moving unit (2), placed between the load carrying body (9) and the chassis (3) of the vehicle (1), which moving unit comprises two arms (12, 13) pivotably connected to each other near one of their ends (11), while the upper extremity of the moving unit (2) is connected to the sub-chassis of the load carrying unit by means of an upper connection member (15) and the lower extremity of the moving unit (12) is connected to the chassis (3) of the vehicle (1) by means of a lower connection member (16), each of the connection members being revolvable around an axis being in a plane perpendicular to the joint axis (11) of the two arms, and a hydraulic cylinder (jack, 14) of which one piece is picotably connected to one of the two arms (13) and the other piece of the hydraulic cylinder is pivotably connected to the other connecting member (16) and that the free end of the other arm or tie rod (12) is connected pivotably to the connecting member (16) to which also has been connected the hydraulic cylinder (14) while both axis of pivotation does not coincide but are placed parallel to each other and that the load carrying body is connected to the chassis by means of a number of members (30) of which each member consists of a sphere (33) being connected to the chassis by means of a rod, and a cylindrical case (31) with in the wall a opening (32) such that the sphere (33) can cylindrical case can co-operate.

./...

_FIG_:1.

-1-

## Tipping mechanism for a load carrying body of a vehicle

The invention relates to a tipping mechanism for a load carrying body of a vehicle, comprising a moving unit, placed between the load carrying body and the chassis of the vehicle, which moving unit comprises two arms pivotably connected to each other near one of their ends, while the upper extremity of the moving unit is connected to the sub-chassis of the load carrying unit by means of an upper connection member and the lower extremity of the moving unit is connected to the chassis of the vehicle by means of a lower connection member, each of the connection members being revolvable around an axis being in a plane perpendicular to the joint axis of the two arms, and a hydraulic cylinder (jack), of which one piece is pivotably connected to one of the two arms, which arm is pivotably connected to one of the two connection members and the other piece of the hydraulic cylinder is pivotably connected to the other connecting member and that the load carrying body is connected to the chassis by means of means such that it can tip around at least one axis.

Such a tipping mechanism is known from the Netherlands Patent 160.200. In this known tipping mechanism, the arm which functions as a tie member, is connected with it free end to the extremity of one of the pieces of the hydraulic cylinder. So it is possible to place this known tipping mechanism a few centimeters lower than usual. A difficulty of the known mechanism is that the cylinder is under strain of bending. This causes that the cylinder has to be adapted or been specially designed for this purpose. An other objection to this known mechanism is that when the tipping movement is started high torsional forces or turning moments will be produced; the arm consisting of the tie members and the hydraulic cylinder are the most vulnerable near the spot where the tie members are connected to the hydraulic cylinder. Near this spot they need to be stiffened specially.

The aim of the invention is a tipping mechanism of which the members of the tipping mechanism can be made out of light and cheap parts and which arms can absorb easely a turning moment.

The aim of the invention has been reached by connecting the free end of the other arm or tie rod, pivotably to the connecting member, to which also has been connected the hydraulic cylinder while both axis of pivotation does not coincide but are placed parallel to each other. With this construction has been reached, that when the tipping mechanism is in the off position, seen in sectional view the arm, consisting of the tie rads and the hydraulic cylinder each take the place of a corner of a triangle. The moment when the tipping mechanism starts raising from the off position, the largest turning moment will act on the arm. From the point of view of construction such an arm is much stronger than an arm of which , seen in sectrional view,. the tie rods and the hydraulic cylinder are in-line, some-where along the arm.

In a prefered embodiment of the mechanism according to the invention, the means which interconnect the load carrying body with the chassis, comprises a number of members, of which each member consists of a sphere being connected to the chassis by means of a rod, and a cylindrical case with in the wall a opening such that the sphere and the cylindrical case can co-operate. With this embodiment has been reached that not only the load carrying body can tip in three directions and if desired even towards the fourth, the front, but also the load carrying body can easely taken down and then placed on the cylindrical cases which than will serve as legs. Next another load carrying body can be put on the vehicle, of coarse if it is provided with the same cylindrical cases.

The invention will be illustrated, with the aid of the drawings wherein:

Fig. 1 is a perspectivic side-view of a vehicle with a tipping mechanism according to the invention;

Fig. 2 a side-view of the tipping mechanism according to the invention according to line II-II of figure 5;

Fig. 3 a sectional view of one of the connection members according to line III-III of figure 2;

Fig. 4 a view of one of the members which interconnects the load carrying body with the chassis;

Fi. 5 a top view of the chassis with the tipping mechanism in the folded position together with the spheres, which serve for the interconnection of a load carrying body and the chassis.

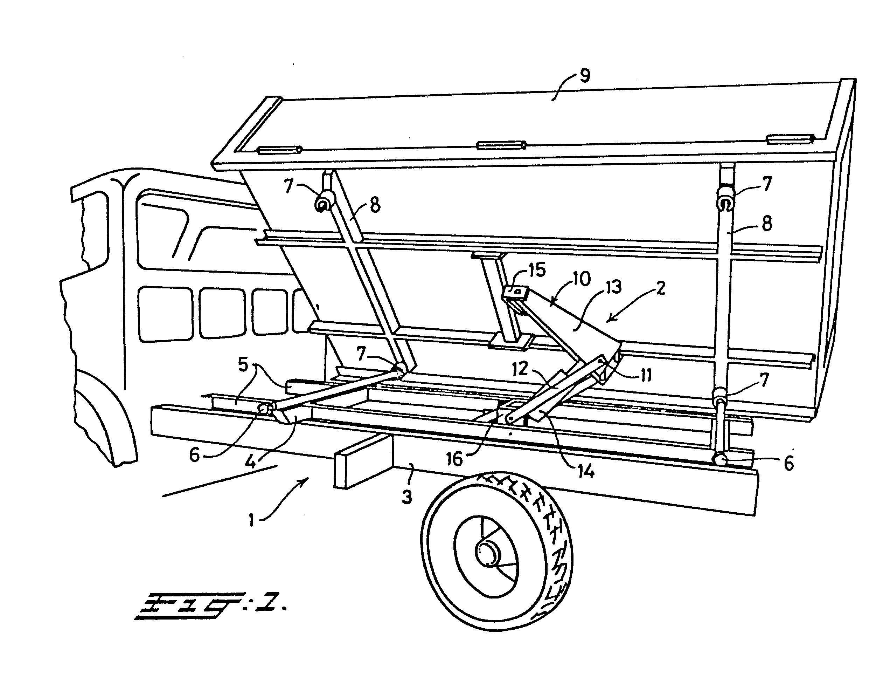

Figure 1 shows a perspectivic view of a part of a vehicle 1 with a tipping mechanism 2 according to the invention. On the chassis 3 of the vehicle 1 are mounted a number of transverse girders 4 supported by girders 5. Near the extremities of the transverse girders 4 are fixed spheres 6, each of which can co-operate with a cylindrical case 7 fixed near the extremities of two transverse girders 8, which are mounted underneath the load carrying body 9. Between the load carrying body 9 and the chassis 3 of the vehicle there has been placed a moving unit 10 comprising a hydraulic cylinder 14 and two arms 12, 13 interconnected near one of their extremities and mounted pivotably around an axis 11. The upper end of the moving unit 10 is connected to the underside of the load carrying body 9 by means of an upper connection member 15 and the lower extremity of the moving unit 10 has been connected to the chassis 3 by means of a lower connection member 16.

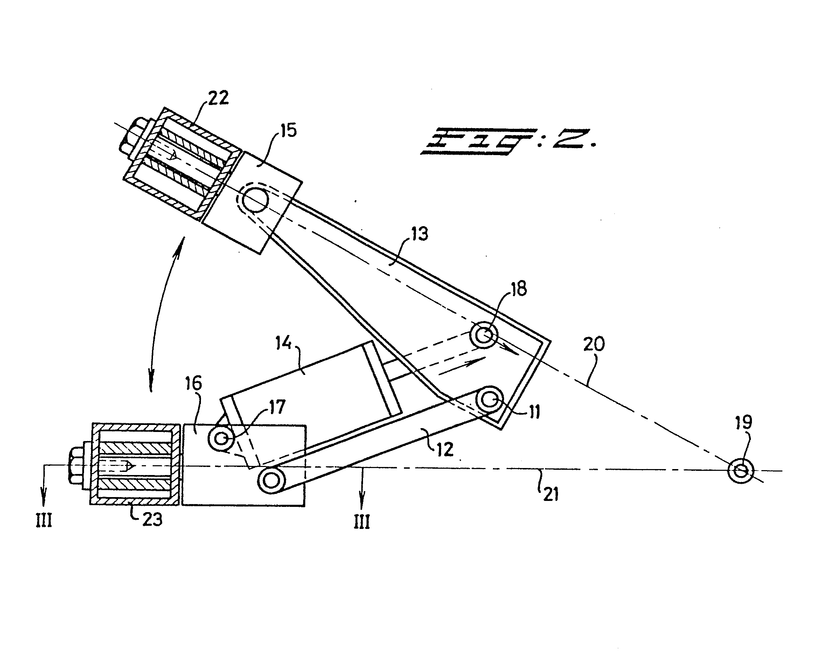

Figure 2 shows in outline a side view of the tipping mechanism 2 according to the invention. The moving unit consists of two arms 12, 13 which are interconnected to each other by means of an axis 11. The other extremities of the arms are connected to the upper connection member 15, respectively the lower connection member 16. Between the lower connection member 16 and the arm 12 has been placed a hydraulic cylinder 14, connected pivotably around an axis 17 with the lower connection member 16 and connected pivotably around an axis 18 with the arm 12. Shown in outline is the point 19 around which the load carrying body is pivoted or tilted backwards and also the underside 20 of the load carrying body and the upper side 21 of the chassis. The upper connecting member 15 is connected to a transverse girder of box girder 22 which is fixed to the load carrying body. The lower connecting member 16 is connected to a transverse girder or box girder 23, which is fixed to the chassis of the vehicle.

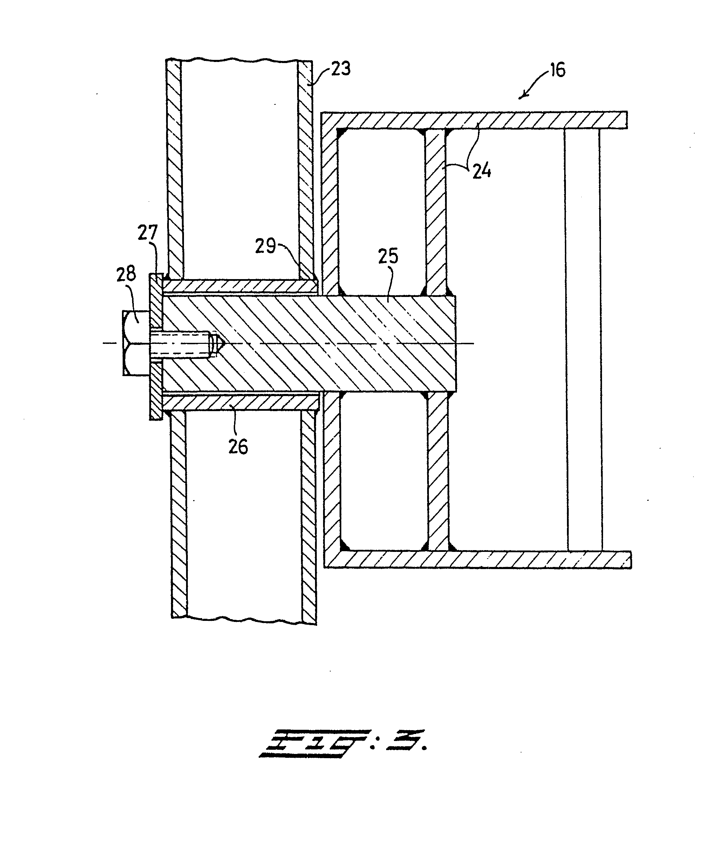

Figure 3 shows in sectional view and more in detail the interconnection of the lower connection member 16 to the box girder 22. The connection member 16 comprises a frame 24 in which is welded a pin which protrude at one side. In the box girder 23 has been fixed a cylindrical case 26, in which the protruding end of the pin 25 can be fixed revolvingly by means of a plate or disc 27 and a bolt 28. The cylindrical case 26 is protruding a little bit so to create a ledge 29 on which the lower connection member 16 can revolve.

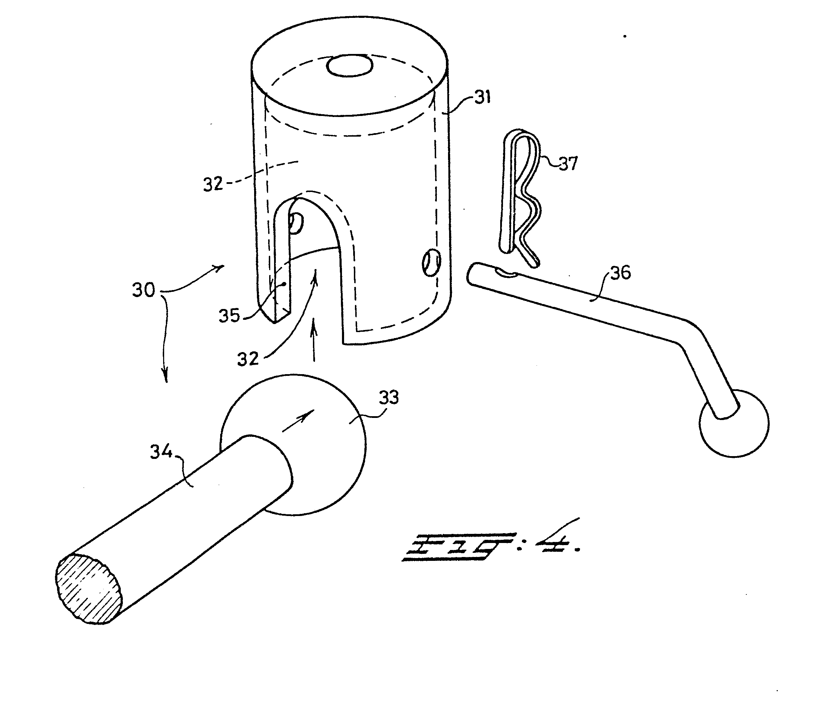

Figure 4 shows enlarged one of the connection members 30 which interconnects the load carrying body with the chassis. The member consists of a cylindrical case 31 (7) with a straight bore 32 in which fit a spherical extremity 33 (sphere 6) of a bar 34. An opening 35 serves not only to give the bar 34 the possibility to revolve around it axis, but also as an additional direction of movement. By means of a locking bar 36 and a hairpin string 37 the sphere 33 can be locked into the cylindrical case 31. An opening 38 serves to have the possibility to fix the cylindrical case 31 (7) to the load carrying body.

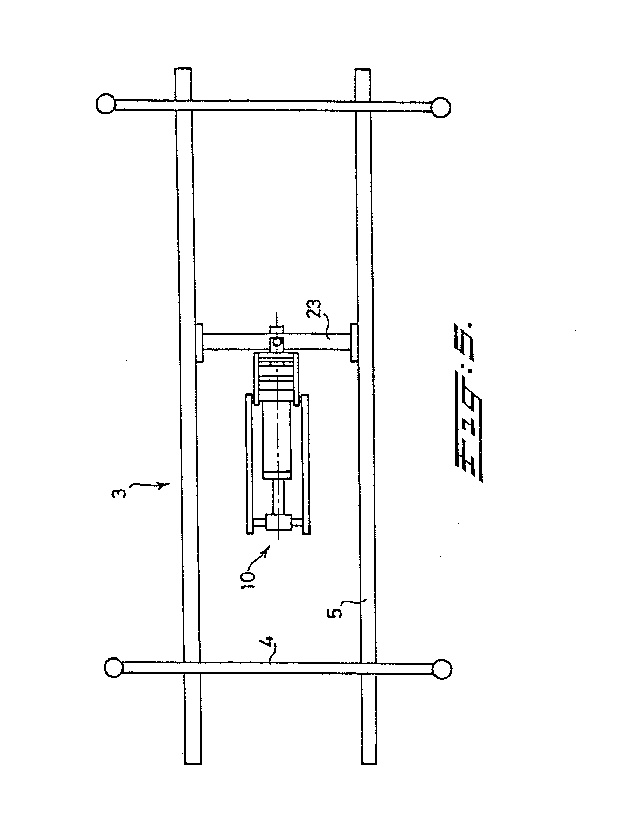

Figure 5 shows a top view of the chassis 3 together with the moving unit in the starting position. Between the girders 5 are mounted transversal girders 4 on which extremities are fixed a sphere. The moving unit is connected to the girders 5 by means of a box girder 23.

- 1 -

## CLAIMS

1.Tipping mechanism for a load carrying body of a vehicle, comprising a moving unit, placed between the load carrying body and the chassis of the vehicle, which moving unit comprises two arms pivotably connected to each other near one of their ends,  while the upper extremity of the moving unit is connected to the sub-chassis of the load carrying unit by means of an upper connection member and the lower extremity of the moving unit is connected to the chassis of the vehicle by means of a lower connection member, each of the connection members being revolvable around an axis being in a plane perpendicular to the joint axis of the two arms, and a hydraulic cylinder (jack) of which one piece is pivotably connected to one of the two arms which arm is pivotably connected to one of the two connection members and the other piece of the hydraulic cylinder is pivotably connected to the other  connecting member and that the load carrying body is connected to the chassis by means of means such that it can tip atound at least one axis, characterized by, that the free end of the other arm or tie rod (12), is connected pivotably to the connecting member (16)to which also has been connected the hydraulic cylinder (14) while both axis of pivotation does not coincide but are placed parallel to each other.

2. Tipping mechanism according to claim 1, characterized by, that each of the connecting members (15, 16) can pivot around an axis, which is in a plane perpendicular to the axis of the axes of pivotation (11, 17, 18).

3. Tipping mechanism according to one of the claims 1 or 2, characterized by, that the means which interconnect the load carrying bovy (9) with the chassis (3), comprises a munber of members (30), of which each member consists of a sphere (6, 33) being connected to the chassis (3) by means of a rod and of a cylindrical case (7, 31) with in the wall a opening (35) such that it the sphere (33) and the cylindrical case (31) can co-operate, while the cylindrical case has been fixed to the load carrying body (9).

Fig. 1.

Fig.2.

FIG.3.

Fig. 4

Fig.5.

0073084

Application number

EP 82 20 1035

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | B 60 P    1/16 |
| A | FR-A-2 448 453  (ANDRA) *Pages 7,8; figure 1* | 1,2 | |
| | --- | | |
| A | GB-A-1 420 694  (DECAUVILLE) *Claims 1-5; figure 1* | 1,2 | |
| | --- | | |
| A | FR-A-2 087 538  (DECAUVILLE) *Claims 1-7; figure 2* | 1,2 | |
| | --- | | |
| A | FR-A-1 287 370  (GOUIN) *Figure 4; Abstract* | 1 | |
| | --- | | |
| A | FR-A-1 545 896  (GENEVE) *Abstract; figure 2* | 1 | |
| | --- | | TECHNICAL FIELDS SEARCHED (Int. Cl. 3) |
| A | FR-A-2 024 747  (LATI) *Figure 1; page 6* | 1 | B 60 P    1/16 |
| | --- | | B 60 P    1/20 |
| A | GB-A-1 103 845  (MARREL) *Figure 2, claims 1-3* | 1 | B 60 P    1/30 |
| | ----- | | |

The present search report has been drawn up for all claims

| Place of search | Date of completion of the search | Examiner |
|---|---|---|
| THE HAGUE | 02-12-1982 | SCHMITTER J.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03.82